# EUROPÄISCHE PATENTSCHRIFT

(11) **EP 0 721 068 B1**
(45) Veröffentlichungstag und Bekanntmachung des Hinweises auf die Patenterteilung: **24.03.1999**
(21) Anmeldenummer: 95115379.0
(22) Anmeldetag: 29.09.1995
(51) Int. Cl.: F16B 7/04

(54) **Gestell aus lösbar verbindbaren Profilstangen**
Frame consisting of detachable profiles
Structure à barres détachables

(30) Priorität: 07.01.1995 DE 19500340
(43) Veröffentlichungstag der Anmeldung: 10.07.1996
(73) Patentinhaber: Vieler International KG, D-58642 Iserlohn (DE)
(72) Erfinder: Hackenberg, Dieter, D-58453 Witten (DE); Risse, Udo, D-58119 Hagen (DE)
(74) Vertreter: Mentzel, Norbert, Dipl.-Phys.

(56) Entgegenhaltungen:
- DE-A- 3 128 595
- DE-A- 4 219 717
- DE-C- 3 927 979

## Beschreibung

Die Erfindung richtet sich auf ein Gestell der im Oberbegriff des Anspruches 1 angegebenen Art. Bei diesem Gestell werden Profilstangen durch einen Verbinder lösbar miteinander gekuppelt. Der Verbinder besteht aus einem Gehäuse mit einem darin längsbeweglich aufgenommenen Halteglied, welches mindestens ein Hakenende aufweist. Das Hakenende wird im Gehäuse querbeweglich geführt. Zur Längsbewegung des Halteglieds dient ein axial federbelasteter Exzenterbolzen, der das Halteglied durchquert und eine Exzenterscheibe aufweist. Das Halteglied besitzt mindestens eine Steuerfläche, an welcher die Exzenterscheibe anliegt. Wenn sich der Verbinder im Hohlraum seiner Profilstange befindet, ragt das Hakenende des Halteglieds stirnseitig aus der Profilstange heraus und ist mit der Längsnut der anderen Profilstange kuppelbar. Dabei greift das äußere Bolzenende in ein Querloch der Profilstange ein, ist dort über ein Drehwerkzeug zugänglich und dient zur Drehbetätigung des Exzenterbolzens.

Bei dem bekannten Gestell dieser Art (DE-31 28 595 C2) ist lediglich das äußere Bolzenende halbseitig in einem zum Hinterende des Gehäuses hin offenen Ausschnitt einer am Gehäuse befindlichen Deckwand drehgelagert und läßt sich gegen die Federbelastung axial ins Gehäuse eindrücken. Dadurch ist der ganze Verbinder mit seinen Bauteilen außerhalb der Profilstange vormontierbar und durch die durckknopfartige Betätigung des Exzenterbolzens im Hohlraum seiner Profilstange einbaubar, wo das äußere Bolzenende in ein Querloch der Profilstange einschnappt. Um den Verbinder aus möglichst wenigen Bestandteilen bequem vormontieren zu können, befindet sich das innere Bolzenende normalerweise im wesentlichen axial außerhalb einer in der Bodenwand des Gehäuses befindlichen Bohrung, taucht aber in diese beim axialen Eindrücken des Exzenterbolzens ein.

Zumindest in der Ausgangsdrehlage des Exzenterbolzens, welche der voll entkuppelten Position des Hakenendes vom Halteglied entspricht, sind das innere und/oder äußere Bolzenende zum Hinterende des Gehäuses hin frei. Daher kann sich der Exzenterbolzen im Gehäuse verkippen. Das hat zur Folge, daß seine Exzenterscheibe nicht mehr mit ihrer am Halteglied befindlichen Steuerfläche ausgerichtet ist. Eine Drehbetätigung des verkippten Exzenterbolzens geht ins Leere und führt nicht zu der bestimmungsgemäßen Längsverschiebung des Halteglieds. Dadurch kommt auch nicht die zum Kuppeln erforderliche Querbewegung des Hakenendes zustande. Obwohl der verkuppelte Exzenterbolzen sich in einer vermeintlichen Enddrehlage befindet, welche die gekuppelte Position des Hakenendes kennzeichnet, führt das Hakenende die Kupplungsbewegung nicht aus. Daher sind die beiden Profilstangen nicht miteinander verbunden. Diese Fehl-Betätigung des Exzenterbolzens ergibt sich insbesondere durch ein Drehwerkzeug, welches am äußeren Bolzenende angreift. Das Drehwerkzeug bildet nämlich einen verlängerten Hebelarm und begünstigt ein Verkippen des Exzenterbolzens im Gehäuse. Solche Fehl-Bedienungen ergeben sich insbesondere durch nicht ausreichend qualifizierte Monteure oder durch einen hektischen Betrieb beim Zusammenbau der Profilstangen.

Der Erfindung liegt die Aufgabe zugrunde, ein schnell und sicher zusammenbaubares Gestell der im Oberbegriff des Anspruches 1 genannten Art zu entwickeln, das beim Zusammenbau der Profilstangen die genannten Fehl-Bedienungen der Verbinder verhindert. Dieses neue Problem läßt sich auf zwei selbständige Weisen lösen. Die erste Lösung ist im Kennzeichen des Anspruches 1 angegeben und die zweite Lösung im Kennzeichen des Anspruches 6 erwähnt. Diesen beiden Lösungen kommt folgende besondere Bedeutung zu.

Bei der im Kennzeichen des Anspruches 1 angegebenen ersten Lösung bildet das Halteglied mit der auf ihm angeordneten Stütze eine Drehführung für den Exzenterbolzen, die zum inneren Bolzenende hin axial zurückgesetzt ist. Das Halteglied liegt also außer über seine Steuerfläche und die Exzenterscheibe auch noch über seine Stütze am Exzenterbolzen an. Der Exzenterbolzen ist somit nicht nur an seinem äußeren Bolzenende im Ausschnitt der Gehäuse-Deckwand drehgelagert, sondern findet, in axialem Versatz dazu, noch eine zweite Drehführung an dieser Stütze, wenn die erwähnte Ausgangsdrehlage des Exzenterbolzens vorliegt, welche die entkuppelte Position des Hakenendes bestimmt. Diese Stütze am Halteglied dient zur Drehführung des Exzenterbolzens insbesondere an jener Seite, zu welcher hin der Exzenterbolzen sich verkippen könnte. Durch diese Stütze wird der Exzenterbolzen daher an dieser gefährdeten Stelle stabilisiert.

Die Besonderheit dieser Lösung besteht also darin, daß das Halteglied in der entkupplungsbestimmenden Ausgangsdrehlage eine zusätzliche zweite Drehführung für den Exzenterbolzen erzeugt. Weitere Maßnahmen und Vorteile für diese Lösung ergeben sich aus den Unteransprüchen 2 bis 5.

Die im Kennzeichen des Anspruches 6 angegebene zweite Lösung des genannten Problems der Kippsicherung des Exzenterbolzens besteht darin, eine Abdeckung am montierten Exzenterbolzen anzubringen, welche eine sonst die Kippgefahr begründende Montageaussparung am Bolzenende verschließt. Vor und während der Montage des Exzenterbolzens ins Gehäuse ist die Abdeckung allerdings noch nicht befestigt, weshalb ein schneller und bequemer Zusammenbau des Verbinders aus nur wenigen Bestandteilen möglich ist. Für die Montage dient die erwähnte Montageaussparung im Stirnbereich des Bolzenendes und ein Montagevorsprung an der Bodenwand des Gehäuses. Damit ist eine drehorientierte Einschubmontage des Exzenterbolzens ins Gehäuse zusammen mit dem Halteglied möglich.

Nach der Montage wird die Abdeckung am inneren Bolzenende befestigt. Dann dient die Umfangsfläche der Abdeckung zur Drehführung des Bolzenendes und bildet somit eine Art Lagerzapfen am inneren Bolzenende des Exzenterbolzens. Dieser Lagerzapfen kann nun in die eingangs erwähnte Bohrung der Gehäuse-Bodenwand eingreifen, die dann als Lagerauge fungiert. Die Abdeckung erzeugt somit eine zweite Drehlagerstelle für den Exzenterbolzen, welche eine Kippbewegung grundsätzlich ausschließt. Weitere Maßnahmen und Vorteile der Erfindung ergeben sich aus den Unteransprüchen 7 bis 9.

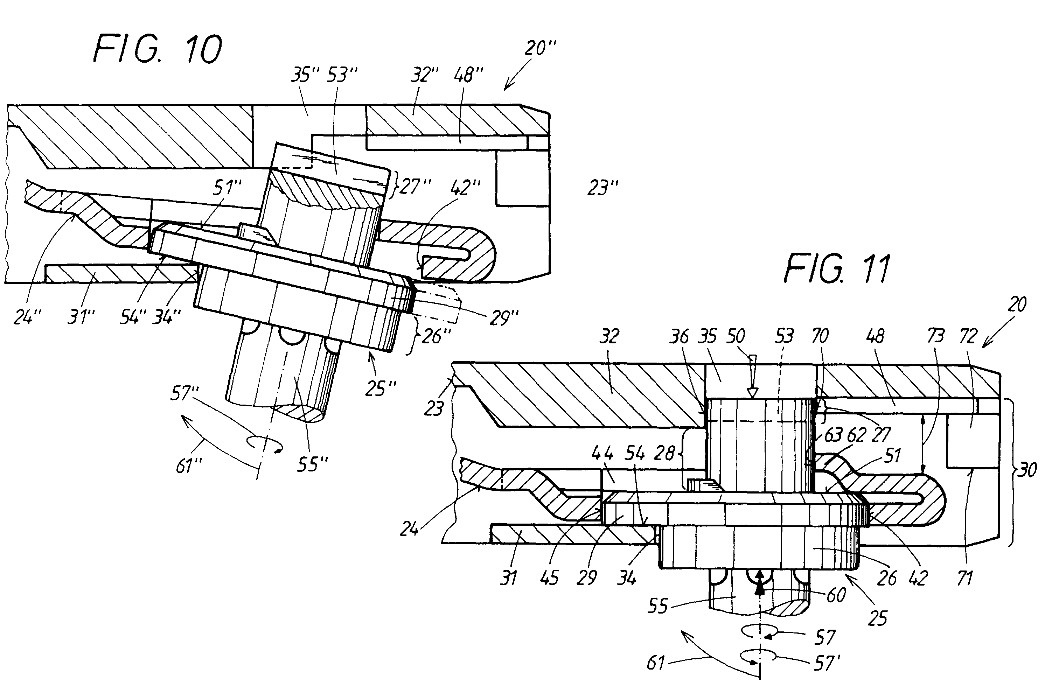

Vorteilhafte Ausführungen für beide Ausführungen ergeben sich schließlich aus den Unteransprüchen 10 bis 13. Dazu wird auch auf die nachfolgende Beschreibung und die Zeichnungen verwiesen, wo die Erfindung in zwei Ausführungsbeispielen und, in Fig. 10, der Stand der Technik dargestellt sind. Es zeigen:
- Fig. 1: die geschnittene Seitenansicht durch eine vorbereitete Verbindungsstelle eines Gestells mit zwei Abschnitten der beiden zu verbindenden Profilstangen vor ihrer Kupplung, wobei die Schnittführung aus der Schnittlinie 1-1 von Fig. 2 zu entnehmen ist,
- Fig. 2, 3 und 4: die geschnittenen Draufsichten auf die noch nicht gekuppelte Verbindungsstelle mit den aus Fig. 1 ersichtlichen Profilstangen, wobei die Schnittführung längs der drei Schnittlinien II-II, III-III und IV-IV von Fig. 1 zu erkennen ist und in Fig. 3 sich ein Bauteil in einer Eindruckposition befindet,
- Fig. 5: in einer der Fig. 3 entsprechenden geschnittenen Draufsicht die Kupplungsstellung der beiden Profilstangen an der Verbindungsstelle, wenn der erwähnte Bauteil nicht mehr axial eingedrückt, sondern aufgrund einer Federkraft sich in einer Ausgangsposition befindet,
- Fig. 6: in einer der Fig. 1 entsprechenden Draufsicht auf ein zum Verbinder gehörendes Gehäuse, vor Montage von zwei weiteren, in Fig. 7 einerseits und Fig. 8 und 9 andererseits gezeigten Bauteilen,
- Fig. 7: in einer der Fig. 2 entsprechenden Draufsicht den ersten Bauteil, nämlich einen Exzenterbolzen, teilweise ausgebrochen gezeichnet, der im Gehäuse von Fig. 6 montiert wird,
- Fig. 8 und 9: die Draufsicht und die Vorderansicht auf den zweiten Bauteil, nämlich ein plattenförmiges, profiliertes Halteglied, welches zusammen mit dem Exzenterbolzen von Fig. 7 in das aus Fig. 6 erkennbare Gehäuse zu montieren ist,
- Fig. 10: eine Ausführung nach dem Stand der Technik, wo in Vergrößerung und in einem der Fig. 3 entsprechenden Schnitt das Hinterende eines fertig montierten Verbinders gezeigt ist, und zwar bei einer Fehlbedienung durch ein Drehwerkzeug,
- Fig. 11: in einer der Fig. 10 entsprechenden Vergrößerung und Schnittdarstellung das Ende des zum ersten Ausführungsbeispiel der Erfindung gehörenden Verbinders, der vorausgehend in den Fig. 1 bis 9 bereits gezeigt worden ist und
- Fig. 12: in einer der Fig. 11 entsprechenden Darstellung ein zweites Ausführungsbeispiel eines Verbinders nach der Erfindung.

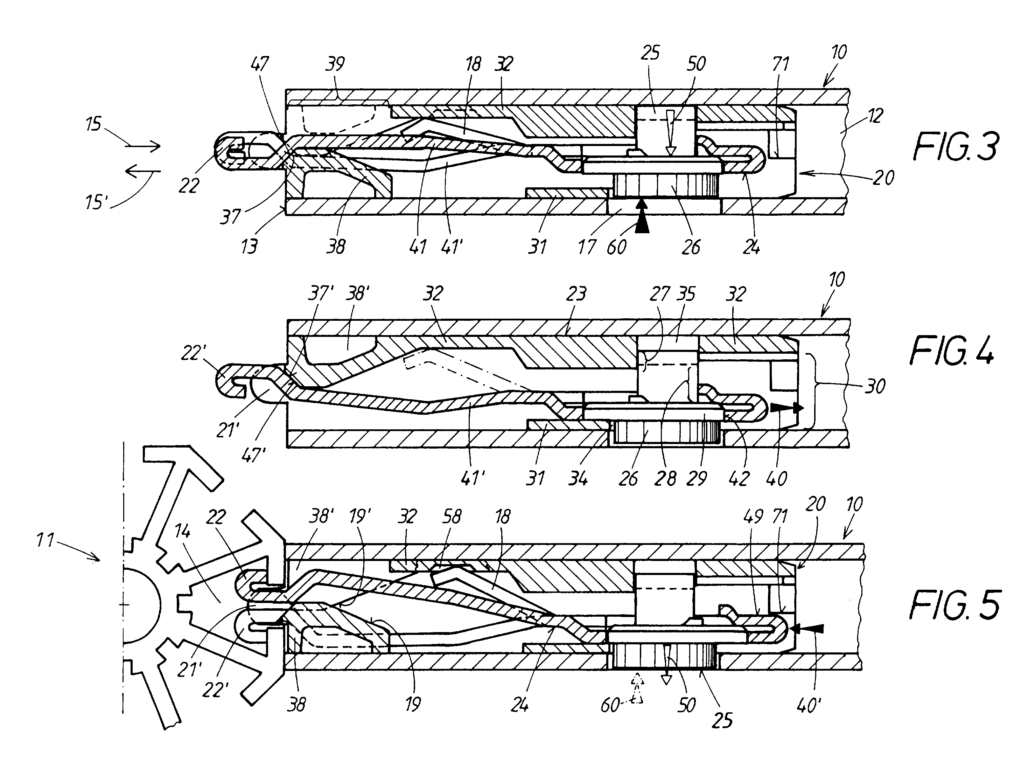

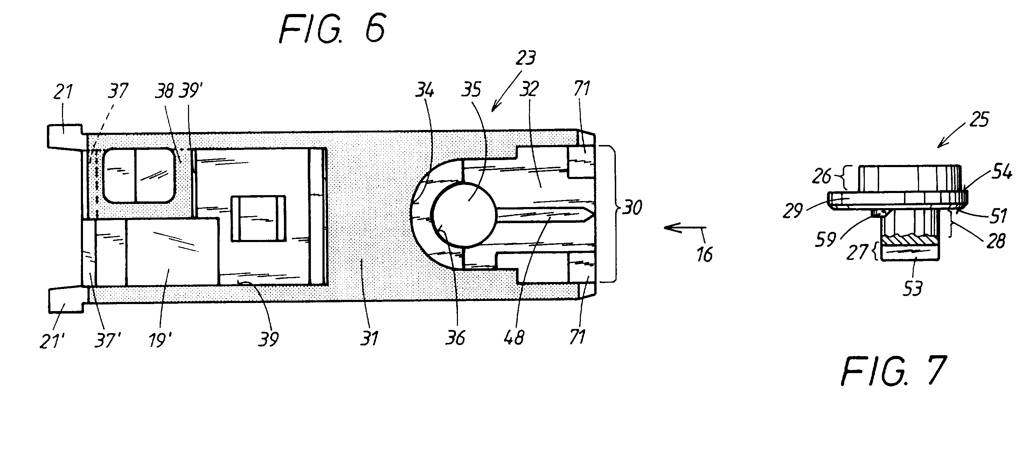

Durch einen Verbinder 20 sollen jeweils zwei Profilstangen 10, 11 zu einem Gestell miteinander gekuppelt werden. Dazu wird der Verbinder 20 mit seinem Gehäuse 23 in einen Hohlraum 12 der einen Profilstange 10 eingesteckt im Sinne des aus Fig. 3 ersichtlichen Einsteckpfeils 15. Dann ragen aus der Stirnfläche 13 der Profilstange 10 zwei bewegliche Hakenenden 22, 22' eines plattenförmigen Halteglieds 24 und zwei starre Nasen 21, 21' heraus, die sich am vorderen Ende des Gehäuses 23 befinden. Im Kupplungsfall greifen die beiden Nasen 21 und die Hakenenden 22, 22', wie aus Fig. 5 zu erkennen ist, in eine hinterschnittene Nut 14 der anderen Profilstange 11 ein. Diese Profilstange 11 besteht im dargestellten Ausführungsbeispiel aus einer vertikalen achteckigen Säule.

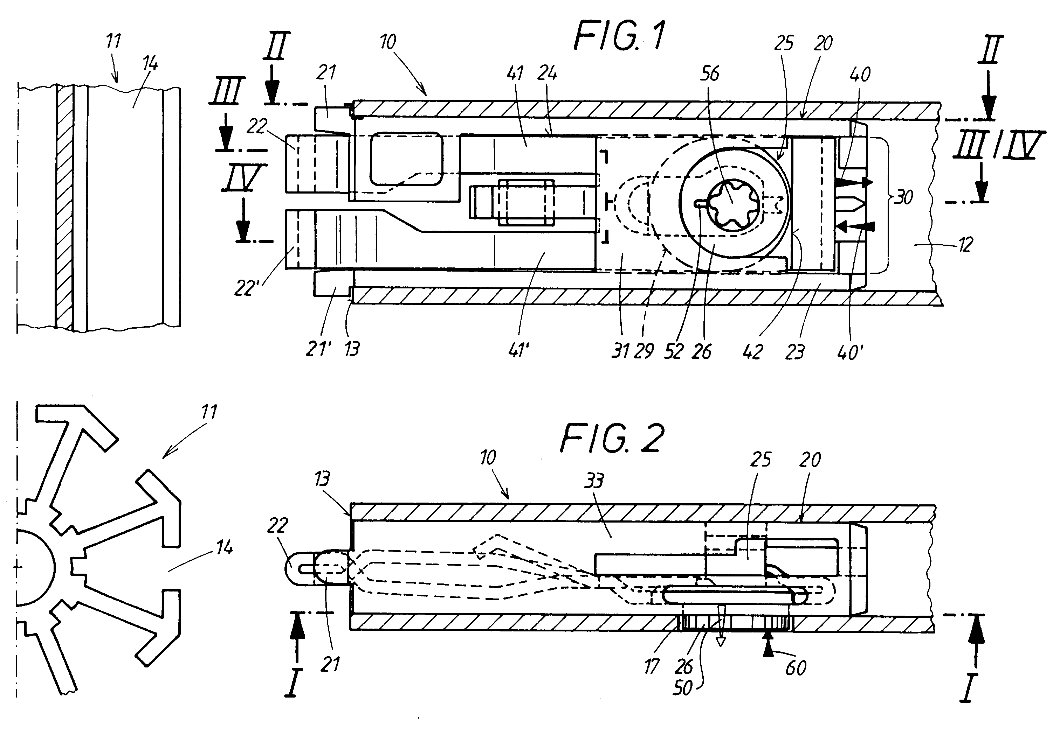

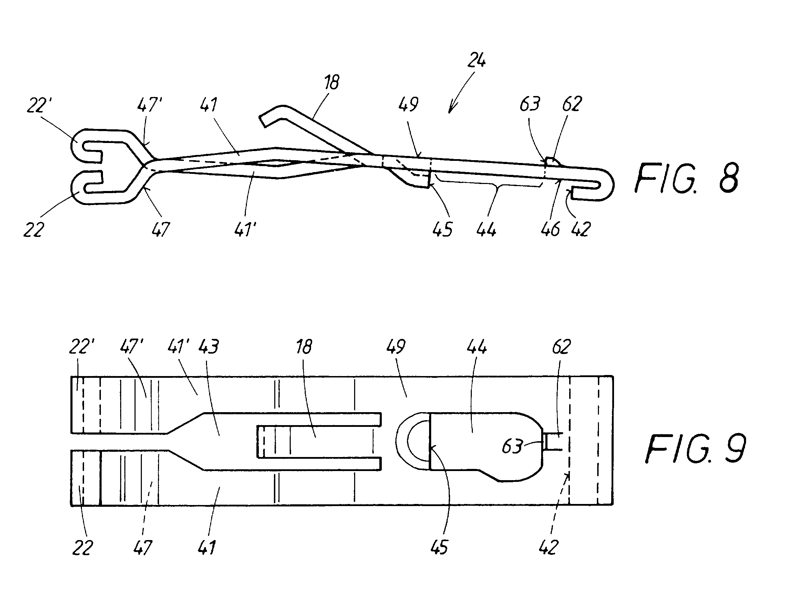

Der Verbinder ist eine vorgefertigte Baueinheit, für welchen, im vorliegenden Fall, nur drei Bestandteile erforderlich sind. Dazu gehört außer dem erwähnten Gehäuse 23 und dem plattenförmigen Halteglied 24 noch ein Exzenterbolzen 25, der in Fig. 7 gezeigt und nur halbseitig im Gehäuse 23 drehgelagert ist. Ausweislich der Fig. 1, 4 und 5 hat das Gehäuse 23 eine dem Hohlraumprofil der Profilstange 10 angepaßte Quaderform und umfaßt eine Deckwand 31 sowie eine Bodenwand 32, welche durch zwei Seitenwände miteinander verbunden sind, von denen die eine Seitenwand 33 in Fig. 2 erkennbar ist. Wie am besten aus Fig. 6 zu entnehmen ist, besitzt die dort punktschraffiert hervorgehobene Deckwand 31 einen zum Hinterende 30 des Gehäuses hin offenen Ausschnitt 34, der zur Drehlagerung des in Fig. 7 erkennbaren abgesetzten äußeren Bolzenendes 26 vom Exzenterbolzen 25 dient. Dies ist besonders gut aus der in Fig. 11 gezeigten Vergrößerung zu erkennen. In der Bodenwand 32 befindet sich eine Bohrung 35, in welche sich normalerweise das gegenüberliegende innere Bolzenende 27 nicht eingreift, wie aus Fig. 4 und 11 zu entnehmen ist. Die Bodenwand 32 ist aber im Bereich der Bohrung 35 gestuft ausgebildet, so daß sich durch die Stufe eine halbseitige, ebenfalls zum Hinterende 30 hin offene schalenförmige Stufen-Stoßfläche 36 ergibt, an welcher das innere Bolzenende 27 halbseitig anliegt. Der Exzenterbolzen 25 dient zur Bewegung des Haltegliedes 24 in Richtung der Pfeile 40 bzw. 40' von Fig. 1, 4 und 5 im Inneren des Gehäuses 23. Dazu hat das Halteglied 24 folgenden, aus Fig. 8 und 9 ersichtlichen Aufbau.

Im hinteren Plattenbereich besitzt das Halteglied 24 einen Durchbruch 44, der im Montagefall von einem Mittelabschnitt 28 des Bolzens gemäß Fig. 4 und 11 durchragt wird. Zum vorderen Plattenende hin ist ein Längsschlitz 43 im Halteglied 24 vorgesehen, der zwei zueinander spiegelbildlich verkröpfte Plattenstreifen 41, 41' mit den bereits erwähnten und zueinander gegensinnig gebogenen Hakenenden 22, 22' erzeugt. Am Hinterende der Platte besitzt das Halteglied 24 eine Steuerfläche 42, welche im vorliegenden Ausführungsbeispiel aus einer zu den Hakenenden 22, 22' hin erfolgten Rückfaltung des Plattenmaterials entsteht. Diese Steuerfläche 42 liegt im Montagefall an einer zum Exzenterbolzen 25 gehörenden Exzenterscheibe 29 an, wie aus Fig. 1, 4 und 11 zu entnehmen ist. Das Halteglied besitzt auch noch eine der Steuerfläche 42 entgegengerichtete Gegensteuerfläche 45, die im Montagefall an der gegenüberliegenden Seite der Exzenterscheibe 29 angreift.

Der Verbinder 20 wird außerhalb seiner Profilstange 10 komplett vormontiert. Dazu wird zunächst der Exzenterbolzen 25 durch den erwähnten Durchbruch 44 in der Platte des Halteglieds 24 hindurchgesteckt, wobei ein in Fig. 7 erkennbarer Radialabsatz 51 des Exzenterbolzens 25 die später der Gehäuse-Deckwand 31 zugekehrte äußere Flächenseite 46 des Halteglieds 24 berührt. Im vorliegenden Fall ist dieser Radialabsatz durch die gegenüber dem abgesetzten äußeren Bolzenende 26 vorspringende innere Scheibenfläche der Exzenterscheibe 29 gebildet. Die beiden Bauteile 24, 27 werden nun durch die am Hinterende 30 in Fig. 6 erkennbare Öffnung ins Innere des Gehäuses 23 eingeschoben. Dies wird durch einen Montagepfeil 16 in Fig. 6 verdeutlicht. Dabei fahren die beiden Plattenstreifen 41, 41' von hinten ins Gehäuse ein, bis sie, wie aus Fig. 3 und 4 zu ersehen ist, mit Schrägflächen 47, 47' hinter ihnen zugeordnete Gegenschrägen 37, 37' im vorderen Bereich des Gehäuses 23 fahren. Dazu besitzen sowohl die Deckwand 31 als auch die Bodenwand 32 gegeneinander gerichtete napfförmige Anformungen 38, 38' und Fenster 39, 39', die im Höhenversatz in den beiden Gehäusewänden 31, 32 angeordnet sind und paarweise einander gegenüberliegen, was aus Fig. 3 und 6 zu erkennen ist. Die Gegenschrägen 37, 37' entstehen durch ansteigende, gegeneinander gerichtete Innenflächen dieser Anformungen 38, 38', die dann ein Teilstück wandparallel laufen und schließlich, wieder zueinander gegensinnig, abfallen. Durch diesen Abfall entstehen die am besten aus Fig. 5 ersichtlichen Auflaufschrägen 19, 19' für die erwähnte Montage des Halteglieds 24 im Sinne des Einschubpfeils 16 von Fig. 6.

Bei dieser Montage 16 ist auf eine definierte Drehlage der Exzenterscheibe 29 bezüglich der am Halteglied 24 vorgesehenen Steuerfläche 42 zu achten. Dazu ist eine Marke 52 hilfreich, die sich an der Stirnfläche des äußeren Bolzenendes 26 gemäßt Fig. 1 befindet. Diese Drehlage soll nachfolgend "Ausgangsdrehlage" bezeichnet werden. Zur Sicherung dieser Ausgangsdrehlage während der Montage besitzt die in Fig. 6 erkennbare Innenseite der Bodenwand 32 einen rippenförmigen Montagevorsprung, und, wie am besten im Ausbruch von Fig. 7 zu erkennen ist, das innere Bolzenende 27 an seinem Stirnbereich eine rinnenförmige, diametrale Montageaussparung 53. Das Ende der Einschubbewegung 16 ist erreicht, wenn das äußere Bolzenende 26 im halbkreisförmigen Ausschnitt 34 der Gehäuse-Deckwand 31 und das innere Bolzenende 27 an der schalenförmigen Stufen-Stoßfläche 36 der Gehäuse-Bodenwand 32 zur Anlage kommen. Dann hintergreifen die beschriebenen Schrägflächen 47, 47' an den beiden Plattenstreifen 41, 41' die beiden gehäuseseitigen Gegenschrägen 37, 37', wie bereits beschrieben wurde. Dann ist zwar, gemäß Fig. 11, die Exzenterscheibe 29 an ihrer dem Ausschnitt 34 gegenüberliegenden Seite von der zum Halteglied 24 gehörenden Steuerfläche 42 hintergriffen, doch liegt dem zur Bohrung 35 der Bodenwand 32 zugekehrten Ende des rippenförmigen Montagevorsprungs 48 die Rinnenöffnung 53 der im Exzenterbolzen 25 befindlichen Montageaussparung 53 gegenüber.

Der Exzenterbolzen 25 steht unter der Wirkung einer axialen Federkraft, die in Fig. 3, 5 und 11 durch einen Kraftpfeil 50 veranschaulicht ist. Diese Federkraft 50 könnte zwar von einer unmittelbar auf den Exzenterbolzen 25 einwirkenden Feder erzeugt werden, doch erfolgt dies im vorliegenden Fall mittelbar durch das Halteglied 24. Dazu kann z. B. eine Wendelfeder verwendet werden, welche zunächst auf die in Fig. 8 und 9 erkennbare innere Flächenseite 49 des Halteglieds 24 wirkt. Die Federkraft wirkt dann durch die erwähnte äußere Flächenseite 46 des Halteglieds 24 auf die sich dort abstützende Radialstufe 51 am Exzenterbolzen 25.

Im vorliegenden Ausführungsbeispiel wird diese axiale Federkraft 50 auf wesentlich einfacherere Weise erreicht, wie aus Fig. 3 und 5 zu erkennen ist. Die Platte des Halteglieds 24 besteht aus federelastischem Material, wie Federstahl, und besitzt eine ausgeschnittene Federzunge 18. Diese Federzunge 18 entsteht im vorliegenden Fall durch eine Gabelung des erwähnten Längsschlitzes 43 und wird von dem zwischen den beiden Plattenstreifen 41, 41' befindlichen Plattenmaterial erzeugt. Das freie Zungenende ist zwar zu den beiden Hakenenden 22, 22' der Plattenstreifen 41, 41' hin gerichtet, aber demgegenüber zurückgesetzt. Außerdem ist die Federzunge 18, wie Fig. 8 verdeutlicht, aus der mittleren Ebene des Plattenmaterials herausgebogen und stützt sich nach der Montage an der Innenseite der aus Fig. 3 und 5 erkennbaren Gehäuse-Bodenwand 32 ab. In diesem Bereich kann die Bodenwand 32 auch mit einer aus Fig. 5 erkennbaren Vertiefung 58 versehen sein, die zur Positionierung des freien Zungenendes dient.

Die vom Halteglied 24 auf den erwähnten Radialabsatz 51 des Bolzens 25 ausgeübte Federkraft 50 hält den Exzenterbolzen 25 normalerweise in der aus Fig. 11 ersichtlichen Axialposition, wo das äußere Bolzenende 26 über die äußere Begrenzung der Gehäuse-Deckwand 31 axial vorspringt. Diese Position ergibt sich, weil der Exzenterbolzen 25 an seinem äußeren Ende 26 auch noch einen radialen Gegenabsatz 54 gemäß Fig. 7 besitzt, der hier von der äußeren Scheibenfläche des Exzenters 29 gebildet ist und sich, ausweislich der Fig. 11, an der Innenseite der Gehäuse-Deckwand 31 abstützt. Das aus dem Gehäuse 23 axial vorspringende äußere Bolzenende 26 greift im Einbauzustand in der Profilstange 10, wie am besten aus Fig. 2 hervorgeht, in ein seitliches Querloch 17 der Profilstange 10 hinein. Dadurch wird der Verbinder 20 in einer definierten Längslage in der Profilstange 10 festgehalten. Die erwähnten Hakenenden 22, 22' ragen zusammen mit den Nasen 21, 21' in definierter Weise aus der Stirnfläche 13 der Profilstange 10 heraus. Der Verbinder 20 kann aus einer Einbaulage in der Profilstange 10 wieder ausgebaut werden, indem man auf das im Profilstangen-Querloch 17 sichtbare äußere Bolzenende 26 die durch einen Pfeil 60 in Fig. 2 und 3 verdeutlichte Eindrückkraft ausübt. Bei diesem Eindrücken 60 taucht das in Fig. 11 ersichtliche innere Bolzenende 27 in die Bohrung 25 der Gehäuse-Bodenwand 32 axial ein, bis, ausweislich der Fig. 3, das äußere Bolzenende 26 nicht mehr über die Außenseite der Gehäuse-Deckwand 31 vorspringt. Fig. 3 zeigt also die volle Eindrückposition des Exzenterbolzens 25, wo das Querloch 17 der Profilstange 10 freigegeben ist. Dann läßt sich der ganze Verbinder 20 im Sinne des Pfeils 15' wieder aus dem Stangen-Hohlraum 12 herausziehen.

Der Einbau des Verbinders 20 im Sinne des bereits beschriebenen EinsteckPfeils 15 von Fig. 3 erfolgt in analoger Weise. Beim vormontierten Verbinder 20 wird der Exzenterbolzen 25 mit seinem Bolzenende 26 druckknopfartig eingedrückt, bis sein äußeres Bolzenende 26 nicht mehr aus der Gehäuse-Deckwand 31 vorspringt. Dann wird der Verbinder 20 von der Stirnfläche 13 der Profilstange 10 aus eingeführt, bis sein unter axialer Federkraft 50 stehender Exzenterbolzen 25 in das Querloch 17 einschnappt. Es liegt dann die Position von Fig. 2 oder 4 vor. In Fig. 2 sind die beiden Hakenenden 22, 22' in ihrer vollen Ausfahrstellung weitgehend gegeneinander geklappt. Sie liegen in fluchtender Lage zwischen den beiden feststehenden Gehäuse-Nasen 21, 21'. Die Hakenenden 22, 22' nehmen in der Ausfahrstellung des Halteglieds 24 eine minimale Breite ein, die sich bequem durch eine schmale Eintrittsöffnung ins Innere der Nut 14 der anderen Profilstange 11 einführen läßt.

Der Exzenterbolzen 25 kann mittels eines Drehwerkzeugs 55 aus seiner Ausgangsdrehlage in Fig. 1 im Gehäuse 23 verstellt werden. Dazu ist eine unrund profilierte Werkzeugaufnahme 56 im Stirnbereich des äußeren Bolzenendes 26 vorgesehen. Bei einer solchen, aus Fig. 11 erkennbaren Werkzeugdrehung 57, drückt die sich drehende Exzenterscheibe 29 die beschriebene Steuerfläche 42 nach hinten und es findet die durch den bereits erwähnten Bewegungspfeil 40 veranschaulichte Längsbewegung des Halteglieds im Gehäuse 23 statt. Dadurch werden die beiden Hakenenden 22, 22' aus ihrer in Fig. 1 bis 4 ersichtlichen maximalen Ausfahrstellung in ihre in Fig. 5 gezeigte Einziehstellung überführt. Durch Zusammenwirken der Schrägflächen 47, 47' der beiden Plattenstreifen 41, 41' mit den ihnen zugeordneten gehäuseseitigen Gegenschrägen 37, 37' kommt es bei der Einzugsbewegung 40 auch noch zu einer in Fig. 5 erkennbaren Spreizung der beiden Hakenenden 22, 22'. Die beiden Hakenenden 22, 22' sind dann auf eine große Breite auseinandergespreizt und hintergreifen, wie Fig. 5 zeigt, die hinterschnittenen Innenflächen der Profilstangen-Nut 14. Bei dieser Längsbewegung 40 kommt es schließlich noch zu einem Zusammenpressen der die Nut 14 in der Profilstange 11 erzeugenden Profilwände zwischen der Stirnfläche 13 der zum Verbinder 20 gehörenden Profilstange 10 einerseits und den gegenüberliegenden beiden Hakenenden 22, 22' andererseits. Es liegt eine schraubstockartige Verspannung vor. Die beiden Profilstangen 10, 11 sind sehr zuverlässig miteinander verbunden. In diesem Fall befindet sich der Exzenterbolzen 25 in seiner zu Fig. 1 um 180° versetzten, diametralen Enddrehlage, die durch die entsprechende Position der beschriebenen Marke 52 ablesbar ist. Diese Enddrehlage kann durch einen Drehanschlag 59 am Exzenterbolzen 25 gemäß Fig. 7 und ein geeignetes stufenförmiges Öffnungsprofil vom Durchbruch 44 im Halteglied 24, gemäß Fig. 9, begrenzt sein.

Zum Lösen der beiden Profilstangen 11 braucht der Exzenterbolzen 25 über das Drehwerkzeug 55 lediglich in die aus Fig. 11 ersichtliche Gegendrehrichtung 57' betätigt zu werden. Dann erfolgt über die Exzenterscheibe 29 und die am Halteglied 24 vorgesehene, bereits erwähnte Gegensteuerfläche 45 die im Sinne des bereits erwähnten Pfeils 40' wirksame Lägnsbewegung des Halteglieds 24. Dann werden die beiden Hakenenden 22, 22' wieder in ihre Ausfahrstellung überführt, bis schließlich die volle Ausgangsdrehlage gemäß Fig. 1 vorliegt. Wegen der ihrem Plattenmaterial innewohnenden Federspannung werden die beiden heraus fahrenden Hakenenden 22, 22' auf den gehäuseseitigen Gegenschrägen 37, 37' wieder gegeneinander geführt, so daß schließlich wieder die Ausgangsposition von Fig. 1 bis 4 erreicht ist.

In der Ausgangsdrehlage ist das innere Bolzenende 27 zum Hinterende 30 des Gehäuses 23 hin frei, weil die beschriebene Montageaussparung 53 mit ihrer Rinnenöffnung zum rippenförmigen Montagevorsprung 48 an der Gehäuse-Bodenwand 32 hin frei liegt. Es besteht, ohne die noch näher zu beschreibenden besonderen erfindungsgemäßen Maßnahmen, die Gefahr, daß sich der Exzenterbolzen verkippt, was anhand der Fig. 10 verdeutlicht werden soll. In Fig. 10 ist ein Verbinder 20'' nach dem Stand der Technik in einer der Fig. 11 entsprechenden Darstellung gezeigt. Zur Bezeichnung der dortigen Bauteile werden die gleichen Bezugszeichen wie im vorbeschriebenen Ausführungsbeispiel der Erfindung verwendet, aber zur Unterscheidung davon, mit einem Doppelstrich ('') gekennzeichnet. Es gilt insoweit die bisherige Beschreibung. Aus Fig. 10 ist folgendes zu erkennen.

Bei eingestecktem Drehwerkzeug 55'' läßt sich der Exzenterbolzen 25'' in Richtung des Pfeiles 61'' soweit abwinkeln, daß seine Exzenterscheibe 29'' nicht mehr an der Steuerfläche 42'' des dortigen Haltegliedes 24'' anliegt. Das innere Bolzenende 27'' ist nämlich nicht allseitig in der Gehäusebohrung 35'' drehgelagert. Die rinnenförmige Montageaussparung 53'' kann sich bei diesem Verkippen 61 am rippenförmigen Montagevorsprung 48'' des Gehäuses 23'' vorbeibewegen. Die äußere Scheibenfläche 54'' der Exzenterscheibe 29'' stützt sich an der Kante des Gehäuse-Ausschnitts 34'' in der Gehäuse-Deckwand 31'' ab und das Hinterende des Halteglieds 24'' läßt sich gegen die axiale Federbelastung zur Gehäuse-Bodenwand 32'' hin zurückdrücken. In dieser Kipp-Position ist der Exzenterbolzen 25'' nicht daran gehindert, über das Drehwerkzeug 55'' in der beschriebenen Weise, gemäß dem Drehpfeil 57'' von Fig. 10, verdreht zu werden und der exzentrische Bereich der Scheibe 29'' läuft vor dem rückgebogenen Hinterende des Halteglieds 24'' vorbei, wie strichpunktiert in Fig. 10 verdeutlicht ist. Dann liegt die Steuerfläche 42'' vom Hinterende des Halteglieds an der inneren Scheibenfläche 51'' des Exzenters 29'' und nicht an deren exzentrischen Umfangsfläche an. Es liegt eine Fehlbedienung vor.

Wenn die Bedienungsperson das Verkippen 61 nicht erkennt, ist sie aufgrund der Drehung 57'' der irrigen Ansicht, die Enddrehlage des Exzenterbolzens 25'' erreicht zu haben, welche - wenn diese Fehlbedienung nicht vorliegt - die beschriebene Kupplung zwischen den beiden Profilstangen 10, 11 über die beiden Hakenenden kennzeichnet. Bei dieser Fehlbedienung aber ist weder die beschriebene Längsbewegung des Halteglieds 24'' erfolgt noch ist die in Fig. 5 beschriebene Querbewegung der beiden Hakenenden eingetreten. Die beiden Profilstangen 10, 11 sind nicht miteinander verbunden. Das kann zu schwerwiegenden Unfällen führen. Die in Fig. 10 strichpunktiert angedeutete Fehlsteuerung der Exzenterscheibe 29" ist von außen nicht sichtbar, wenn der Verbinder in einer Profilstange eingebaut ist, die in Fig. 10 nicht mitgezeichnet wurde. Die Kippbewegung 61 des Exzenters wird nämlich auch nicht durch das beschriebene Querloch in der Profilstange verhindert, in welche das verkippte äußere Bolzenende 26" im Einbauzustand eingreift.

Bei der erfindungsgemäßen Ausführung gemäß Fig. 11 ist ein Verkippen im Sinne des dortigen Kippbewegungs-Pfeils 61 weitgehend verhindert. Wie Fig. 8 und 9 zeigen, ist das Halteglied 24 bei diesem Ausführungsbeispiel in seinem hinteren Bereich mit einer dellenartigen Verformung 62 versehen, welche sich unmittelbar an den beschriebenen Plattendurchbruch 44 anschließt. Diese dellenartige Verformung 62 erzeugt eine Stütze 63, welche in der in Fig. 11 gezeigten Ausgangsdrehlage des Exzenterbolzens 25 zur Drehführung des Exzenterbolzens in dessen Mittelabschnitt 28 dient. An der durch die Rinnenöffnung der Montageaussparung 53 ungesicherten Seite des Exzenterbolzens 25, die dem Hinterende 30 des Gehäuses 23 zugekehrt ist, befindet sich jetzt eine zusätzliche Drehführungsstütze 63 für den Exzenterbolzen 25, welche ein Verkippen 61 des Exzenterbolzens 25 verhindert und somit dessen ordnungsgemäße Vertikallage sichert. Im weiteren Vollzug der Drehung 57 greift die der Bohrung 35 zugekehrte Endfläche 70 des rippenförmigen Montagevorsprungs 48 an der Umfangsfläche des inneren Bolzenendes 27 an und verhindert damit bereits eine Kippbewegung 61.

Im vorliegenden Fall ist die Drehführungsstütze 63 nur an einer Stelle des Bolzenumfangs wirksam, nämlich an derjenigen, wo der erwähnte Ausschnitt 34 der Gehäuse-Deckwand 31 offen ist, nämlich zum Hinterende 30 des Gehäuses 23 hin. Ausweislich der Fig. 8 und 9 befindet sich die beschriebene Steuerfläche 42 aufgrund der Rückbiegung der Platte an der äußeren Flächenseite 46 des Plattenmaterials, während die Drehführungsstütze 63 gegenüberliegend, an der inneren Flächenseite 49, angeordnet ist und in Richtung auf das in Fig. 11 erkennbare innere Bolzenende 27 hin axial vorsteht.

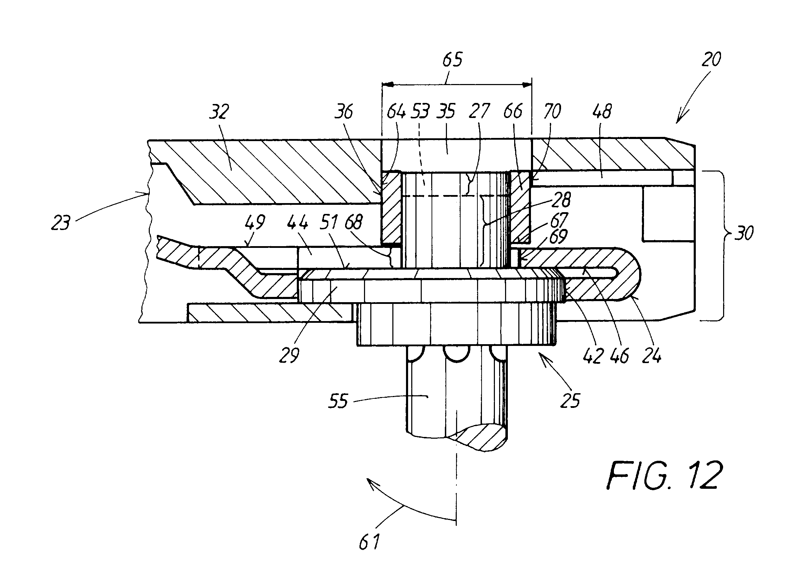

In Fig. 12 ist ein zweites Ausführungsbeispiel der Erfindung erläutert, wobei zur Benennung der entsprechenden Bauteile die gleichen Bezugszeichen wie im bisherigen ersten Ausführungsbeispiel gemäß Fig. 1 bis 9 und Fig. 11 verwendet worden sind. Insoweit gilt die bisherige Beschreibung. Es genügt, lediglich auf die Unterschiede einzugehen.

Bei der Montage des Verbinders 20 von Fig. 12 wird das Halteglied 24 zusammen mit dem durch seinen Durchbruch 44 hindurchgesteckten Exzenterbolzen 25 in der beschriebenen Weise durch die Gehäuse-Öffnung im Hinterende 30 des Gehäuses eingeschoben und in eine ausgerichtete Lage mit der Bohrung 35 in der Gehäuse-Bodenwand 32 gebracht. In diesem Ausführungsbeispiel besitzt die Bohrung 35 einen gegenüber dem ersten Ausführungsbeispiel größeren Bohrungsdurchmesser 65 und erlaubt dadurch das nachträgliche Aufsetzen einer Hülse 66, die mindestens den mit der rinnenförmigen Montageaussparung 53 versehenen Bereich des inneren Bolzenendes 27 abdeckt. Im vorliegenden Fall erstreckt sich die Hülse aber auch noch auf den angrenzenden Mittelabschnitt 28 des Exzenterbolzens 25. Dadurch entsteht zwischen der äußeren Stirnfläche 67 der Hülse 66 und der beschriebenen inneren Scheibenfläche 51 des Exzenters 29 eine ringförmige Nut 68, in welche, wie bei 69 in Fig. 12 erkennbar, das Plattenmaterial des Halteglieds 24 mit der den Platten-Durchbruch 44 umgrenzenden Randzone bereichsweise eingreift. Diese äußere Hülsen-Stirnfläche 67 ist der Innenfläche 49 der Halteglied-Platte 24 zugekehrt, während die innere Scheibenfläche 51 des Exzenters 29 an der äußeren Flächenseite 46 anliegt.

Die Hülse 66 ist durch Preßsitz od. dgl. fest mit dem Schaft 27, 28 des Exzenterbolzens 25 verbunden. Die Umfangsfläche 64 der Hülse 66 wirkt wie ein Lagerzapfen, der jetzt nicht nur an der schalenförmigen Stoßfläche 36 im Stufenbereich der GehäuseBodenwand 32, sondern auch gegenüberliegend, an der in Fig. 12 erkennbaren Endfläche 70 des rippenförmigen Montagevorsprungs 48 anliegt. Dadurch entsteht dort eine beidseitige Lageraufnahme für den Hülsenumfang 64. Versucht man über das eingesteckte Drehwerkzeug 55 den Exzenterbolzen 25 im Sinne des Pfeils 61 von Fig. 12 zu verkippen, so stößt der Hülsenumfang 64 an der Vorsprungs-Endfläche 70 an. Dadurch ist die ordnungsgemäße Position des Exzenterbolzens 25 im Gehäuse 23 und damit die stets ausgerichtete Position seiner Exzenterscheibe 29 mit der am Halteglied 24 vorgesehenen Steuerfläche 42 gewährleistet.

Wie schon Fig. 6 zeigt, ist das Gehäuse 23 mit Anschlagflächen 71 versehen, welche die im Zusammenhang mit Fig. 3 beschriebene axiale Eindrückbewegung 60 des Exzenterbolzens 25 dann verhindern sollen, wenn nicht mehr die in Fig. 1 gezeigte Ausgangsdrehlage des Exzenterbolzens 25 vorliegt. In der Ausgangsdrehlage befinden sich die Anschlagflächen 71 außerhalb sämtlicher beim Eindrücken 60 axial beweglicher Teile, z. B. außerhalb des Endes vom plattenförmigen Haltelgied 24.Bei der Eindrückbewegung 60 bewegen sich im dargestellten Ausführungsbeispiel nicht nur der Exzenterbolzen 25, sondern auch die angrenzenden Bereiche des Halteglieds 24 axial mit. Spätestens dann, wenn die aus Fig. 5 erkennbare Enddrehlage vorliegt, ist diese Anschlagfläche 71 mit den axial beweglichen Bauteilen ausgerichtet; nämlich im vorliegenden Fall mit der erwähnten inneren Fläche 49 des plattenförmigen Halteglieds 24. Eine hier durch den strichpunktierten Pfeil 60 in Fig. 5 verdeutlichte Kraft 60 kann den Exzenterbolzen 25 nicht mehr axial eindrücken, weil sich dieser über seinen Radialabsatz an der äußeren Fläche der Halteglied-Platte 24 abstützt. Die innere Plattenfläche 49 ist nämlich auf die Anschlagfläche 71 gefahren. Jetzt ist der Exzenterbolzen 25 blockiert. Eine Druckknopfbetätigung ist nicht mehr möglich und folglich der Verbinder 20 in seiner Einbaulage in der Profilstange 10 gesichert.

Im dargestellten Ausführungsbeispiel befindet sich die Anschlagfläche 71 kurz vor dem Hinterende 30 des Gehäuses und besteht aus der zur Deckwand 31 weisenden Fläche eines im Gehäuseinneren angeformten Auflaufbocks 72, der am besten aus Fig. 11 erkennbar ist. Ausweislich der Fig. 6 ist der Auflaufbock 72 in zwei Teilböcke gegliedert, zwischen denen ein Längskanal für die beschriebene Einschubmontage des Exzenterbolzens 25 sich befindet und wo der Montagevorsprung 48 angordnet ist. In diesem Ausführungsbeispiel entsteht vor dem Auflaufbock 72 ein aus Fig. 11 erkennbarer Freiraum 73, in welchen sich die beim Eindrücken 60 der axial beweglichen Bauteile, nämlich im vorliegenden Fall das Hinterende des Halteglieds 24, dann hineinbewegen kann, wenn die Ausgangsdrehstellung von Fig. 11 bzw. 1 vorliegt. Das axiale Eindrücken des äußeren Bolzenendes 26 ist möglich und es kann der beschriebene Einbau oder Ausbau des Verbinders 20 aus der Profilstange 10 erfolgen.

Es versteht sich, daß solche Anschlagflächen 71 und Freiräume 73 auch in anderer Weise ausgebildet sein könnten. So ist es z. B. möglich, axiale Abwinkelungen oder axiale Vorsprünge am Plattenmaterial des Halteglieds 24 vorzusehen. In diesem Fall könnte die Anschlagfläche 71 von einem Bodenbereich der Gehäuse-Bodenwand 32 gebildet sein, während der davor liegende Freiraum 73 durch einen Ausbruch in der Gehäuse-Bodenwand 32 erzeugt wird.

### Bezugszeichenliste:

- 10: Profilstange für 20
- 11: andere Profilstange
- 12: Hohlraum in 10
- 13: Stirnfläche von 10
- 14: Nut in 11
- 15: Einsteck-Pfeil für 20 in 12 (Fig. 3)
- 15': Herausziehpfeil für 20 in 12 (Fig. 3)
- 16: Einschub-Montagepfeil (Fig. 6)
- 17: Querloch von 10
- 18: Federzunge von 24 (Fig. 8. 9)
- 19, 19': Auflaufschräge bei 38, 38' (Fig. 5)
- 20: Verbinder
- 20": Verbinder nach dem Stand der Technik
- 21, 21': feste Nase an 23
- 22, 22': Hakenende von 24
- 23: Gehäuse von 20
- 24, 24": plattenförmiges Halteglied
- 25, 25": Exzenterbolzen
- 26, 26": äußeres Bolzenende von 25
- 27, 27": inneres Bolzenende von 25
- 28: Bolzen-Mittelstück von 25
- 29, 29": Exzenterscheibe von 25, Exzenter
- 30: Hinterende von 23
- 31, 31": Deckwand von 23
- 32, 32": Bodenwand von 23
- 33: Seitenwand von 23
- 34, 34": Ausschnitt in 31
- 35, 35": Bohrung in 32, Aufnahme in 23
- 36: schalenförmige Stoßfläche bei 35
- 37, 37': Gegenschräge bei 23
- 38, 38': napfförmige Anformungen bei 31 bzw. 32
- 39, 39': Fenster in 31, 32
- 40: kupplungswirksamer Längsbewegungs-Pfeil (Fig. 4)
- 40': entkupplungswirksamer Längsbewegungs-Pfeil (Fig. 5)
- 41, 41': Plattenstreifen von 24
- 42, 42": Steuerfläche an 24
- 43: Längsschlitz in 24
- 44: Durchbruch in 24
- 45: Gegensteuerfläche an 24 (Fig. 8)
- 46: äußere Flächenseite von 24
- 47, 47': Schrägflächen an 41, 41'
- 48, 48": rippenförmiger Montagevorsprung an 32 bzw. 32" (Fig. 6)
- 49: innere Flächenseite von 24
- 50: Pfeil der axialen Federkraft
- 51, 51": Radialabsatz von 25, innere Scheibenfläche von 29 bzw. 29"
- 52: Marke an 26 (Fig. 1)
- 53, 53": rinnenförmige Montageaussparung bei 27 (Fig. 7, 10)
- 54, 54": radialer Gegenabsatz von 25, äußere Scheibenfläche (Fig. 7, 10)
- 55, 55": Drehwerkzeug
- 56: Werkzeugaufnahme in 26 (Fig. 1)
- 57: Werkzeugdrehung (Fig. 11)
- 57': Werkzeug-Gegendrehung (Fig. 11)
- 57": Werkzeugdrehung nach dem Stand der Technik (Fig. 10)
- 58: Vertiefung in 32 (Fig. 5)
- 59: Drehanschlag von 25 (Fig. 7)
- 60: Eindrück-Pfeil
- 61, 61": Kippbewegungs-Pfeil
- 62: dellenartige Verformung bei 24
- 63: Stütze, Drehführungsstütze von 62
- 64: Hülsen-Umfangsfläche von 66
- 65: vergrößerter Durchmesser von 35 (Fig. 12)
- 66: Hülse (Fig. 12)
- 67: äußere Stirnfläche von 66
- 68: Ringnut
- 69: Plattenmaterial von 24
- 70: Endfläche von 48. Bereich von 48
- 71: Anschlagfläche bei 72
- 72: Auflaufbock
- 73: Freiraum bei 23

## Patentansprüche

1. Gestell aus lösbar verbindbaren Profilstangen (10, 11),
von denen wenigstens einige hinterschnittene Nuten (14) und andere einen stirnseitigen Hohlraum (12) zum Einstecken eines zu einem Verbinder (20) gehörenden Gehäuses (23) besitzen, welches ein Halteglied (24) beweglich (40, 40') aufnimmt,
das Halteglied (24) wenigstens ein stirnseitig aus der Profilstange herausragendes Hakenende (22, 22') besitzt, welches im Gehäuse (23) querbeweglich geführt und mit der Nut (14) der anderen Profilstange (11) kuppelbar ist,
wobei ein axial federbelasteter Exzenterbolzen (25) das Halteglied (24) durchquert und eine Exzenterscheibe (29) aufweist, welche mindestens an einer am Halteglied (24) befindlichen Steuerfläche (42) anliegt und, bei einer Drehbetätigung (57, 57') des Exzenterbolzens (25), zur Bewegung (40, 40') des Halteglieds (24) dient,
und das zur Drehbetätigung (57, 57') des Exzenterbolzens (25) dienende äußere Bolzenende (26) und/oder das gegenüberliegende innere Bolzenende (27) nur stellenweise im Gehäuse (23) drehgelagert sind und die Gefahr einer Kippbewegung (61) des Exzenterbolzens (25) im Gehäuse (23) begründen,
**dadurch gekennzeichnet,**
daß das Halteglied (24) eine gegenüber seiner Steuerfläche (42) zum inneren Bolzenende (27) hin axial zurückgesetzte Stütze (Drehführungsstütze 63) aufweist, an welcher der Exzenterbolzen (25) drehgeführt ist, (Fig. 1 bis 9 und 11).

2. Gestell nach Anspruch 1, dadurch gekennzeichnet, daß das Gehäuse (23) eine Deckwand (31) und eine Bodenwand (32) aufweist,
und das äußere Bolzenende (26) des Exzenterbolzens (25), welches zugleich zur Drehbetätigung (57, 57') des Exzenterbolzens dient, halbseitig in einem zum Hinterende (30) des Gehäuses (23) hin offenen Ausschnitt (34) der Gehäuse-Deckwand (31) drehgelagert ist und normalerweise in ein Querloch (17) der Profilstange axial federnd eingreift, aber gegen diese Federbelastung (50) ins Gehäuse axial eindrückbar (60) ist,
während das innere Bolzenende (27) des Exzenterbolzens (25) sich normalerweise im wesentlichen axial außerhalb einer in der Bodenwand (32) des Gehäuses befindlichen Aufnahme (35) befindet, aber beim axialen Eindrücken (60) des Exzenterbolzens (25) in diese Aufnahme (35) eintaucht.

3. Gestell nach Anspruch 1 oder 2, dadurch gekennzeichnet, daß die Drehführungsstütze (63) lediglich an der Seite des Exzenterbolzens (25) angreift, wo sich der Ausschnitt (34) im Gehäuse (23) hin öffnet.

4. Gestell nach einem oder mehreren der Ansprüche 1 bis 3, dadurch gekennzeichnet, daß das Halteglied (24) aus einer profilierten Platte besteht, an deren äußeren Flächenseite (46) sich die Steuerfläche (42) für die Exzenterscheibe (29) befindet und an deren inneren Flächenseite (49) die Drehführungsstütze (63) für den Exzenterbolzen (25) axial vorsteht.

5. Gestell nach einem oder mehreren der Ansprüche 1 bis 4, dadurch gekennzeichnet, daß die Drehführungsstütze (63) aus einer dellenartigen Verformung (62) des Plattenmaterials besteht.

6. Gestell aus lösbar verbindbaren Profilstangen (10, 11),
von denen wenigstens einige hinterschnittene Nuten (14) und andere einen stirnseitigen Hohlraum (12) zum Einstecken eines zu einem Verbinder (20) gehörenden Gehäuses (23) besitzen, welches ein Halteglied (24) beweglich (40, 40') aufnimmt,
das Halteglied (24) wenigstens ein stirnseitig aus der Profilstange herausragendes Hakenende (22, 22') besitzt, welches im Gehäuse (23) querbeweglich geführt und mit der Nut (14) der anderen Profilstange (11) kuppelbar ist,
wobei ein axial federbelasteter Exzenterbolzen (25) das Halteglied (24) durchquert und eine Exzenterscheibe (29) aufweist, welche mindestens an einer am Halteglied (24) befindlichen Steuerfläche (42) anliegt und, bei einer Drehbetätigung (57, 57') des Exzenterbolzens (25), zur Bewegung (40, 40') des Halteglieds (24) dient,
und das zur Drehbetätigung (57, 57') des Exzenterbolzens (25) dienende äußere Bolzenende (26) und/oder das gegenüberliegende innere Bolzenende (27) nur stellenweise im Gehäuse (23) drehgelagert sind und die Gefahr einer Kippbewegung (61) des Exzenterbolzens (25) im Gehäuse (23) begründen,
wobei, zur drehorientierten Einschubmontage (16) des Exzenterbolzens (25) im Gehäuse (23), das innere Bolzenende (27) im Stirnbereich eine Montageaussparung (53) und die Bodenwand (32) des Gehäuses (23) einen Montagevorsprung (48) aufweisen,
**dadurch gekennzeichnet,**
daß am inneren Bolzenende (27) des fertig montierten Exzenterbolzens (25) eine die Montageaussparung (53) radial verschließende Abdeckung (66) sitzt
und die Umfangsfläche (64) der Abdeckung (66) mindestens im Bereich (70) des Montagevorsprungs (48) drehgeführt ist, (Fig. 12).

7. Gestell nach Anspruch 6, dadurch gekennzeichnet, daß das Gehäuse (23) eine Deckwand (31) und eine Bodenwand (32) aufweist,
und das äußere Bolzenende (26) des Exzenterbolzens (25), welches zugleich zur Drehbetätigung (57, 57') des Exzenterbolzens dient, halbseitig in einem zum Hinterende (30) des Gehäuses (23) hin offenen Ausschnitt (34) der Gehäuse-Deckwand (31) drehgelagert ist und normalerweise in ein Querloch (17) der Profilstange axial federnd eingreift, aber gegen diese Federbelastung (50) ins Gehäuse axial eindrückbar (60) ist,
während das innere Bolzenende (27) des Exzenterbolzens (25) sich normalerweise im wesentlichen axial außerhalb einer in der Bodenwand (32) des Gehäuses befindlichen Aufnahme (35) befindet, aber beim axialen Eindrücken (60) des Exzenterbolzens (25) in diese Aufnahme (35) eintaucht.

8. Gestell nach Anspruch 6 oder 7, dadurch gekennzeichnet, daß die Abdeckung aus einer Hülse (66) besteht, welche das innere Bolzenende (27) ummantelt.

9. Gestell nach einem oder mehreren der Ansprüche 6 bis 8, dadurch gekennzeichnet, daß das Halteglied (24) aus einer profilierten Platte besteht,
deren beide Flächenseiten (46, 49) im Montage fall einerseits an einem Radialabsatz (51) des Exzenterbolzens (25) und andererseits an der Abdeckung (66) zur Anlage kommen,
und zwischen dem Radialabsatz (51) des Exzenterbolzens (25) und der Abdeckung (66) eine Radialnut (68) entsteht, in welche das Plattenmaterial des Halteglieds (24) eingreift.

10. Gestell nach einem oder mehreren der Ansprüche 1 bis 9, dadurch gekennzeichnet, daß die axiale Federkraft (50) über das plattenförmige Halteglied (24) auf den Exzenterbolzen (25) ausgeübt wird und der Exzenterbolzen (25) sich über einen Radialabsatz (51) an der äußeren Flächenseite (54) des plattenförmigen Halteglieds (24) abstützt.

11. Gestell nach Anspruch 10, dadurch gekennzeichnet, daß die Exzenterscheibe (29) des Exzenterbolzens (25) mit ihrer inneren Scheibenfläche den Radialabsatz bildet, der sich am Halteglied (24) abstüzt.

12. Gestell nach einem oder mehreren der Ansprüche 1 bis 11, dadurch gekennzeichnet, daß die Platte des Halteglieds (24) aus federelastischem Material besteht und eine ausgeschnittene federelastische Zunge (18) aufweist, welche sich an einer Innenfläche des Gehäuses (23) gleitend abstützt und die axiale Federkraft (50) für den Exzenterbolzen (25) erzeugt.

13. Gestell nach einem oder mehreren der Ansprüche 1 bis 12, dadurch gekennzeichnet, daß das Gehäuse (23) einerseits einen axialen Freiraum aufweist, der in einer die entkuppelte Position des Hakenendes (22, 22') bestimmenden Ausgangsdrehlage (Fig. 1 bis 4) des Exzenterbolzens (25) ein axiales Eindrücken (60) des äußeren Bolzenendes (26) gestattet,
aber die Gehäuse-Bodenwand (32) andererseits eine Anschlagfläche (71) besitzt, die in jeder anderen Drehlage, insbesondere einer, die gekuppelte Position des Hakenendes (22, 22') bestimmenden Enddrehlage (Fig. 5) des Exzenterbolzens (25), das axiale Eindrücken (60) blockiert.

## Claims

1. A framework comprising releasably connectable profile bars (10, 11)
of which at least some have undercut grooves (14) and others have an end cavity (12) for the insertion of a housing (23) which belongs to a connector (20) and which movably (40, 40') accommodates a holding member (24),
the holding member (24) has at least one hook end (22, 22') which projects at the end out of the profile bar and which is transversely movably guided in the housing (23) and which can be coupled to the groove (14) of the other profile bar (11),
wherein an axially spring-loaded eccentric pin (25) passes through the holding member (24) and has an eccentric disc (29) which bears at least against a control surface (42) on the holding member (24) and upon rotary actuation (57, 57') of the eccentric pin (25) serves to produce the movement (40, 40') of the holding member (24),
and the outer pin end (26) which serves for rotary actuation (57, 57') of the eccentric pin (25) and/or the oppositely disposed inner pin end (27) are rotatably supported only in a place-wise manner in the housing (23) and give rise to the danger of a tilting movement (61) of the eccentric pin (25) in the housing (23),
characterised in that the holding member (24) has a support (rotary guide support 63) which is axially set back with respect to the control surface (42) of the holding member towards the inner pin end (27) and at which the eccentric pin (25) is rotatably guided (Figures 1 to 9 and 11).

2. A framework according to claim 1 characterised in that the housing (23) has a top wall (31) and a bottom wall (32),
and the outer pin end (26) of the eccentric pin (25) which serves at the same time for rotary actuation (57, 57') of the eccentric pin is rotatably supported at a half side in an opening (34) in the housing top wall (31), the opening being open towards the rear end (30) of the housing (23), and normally axially resiliently engages into a transverse hole (17) in the profile bar but can be axially urged (60) into the housing against said spring loading (50),
while the inner pin end (27) of the eccentric pin (25) is normally disposed substantially axially outside a receiving means (35) in the bottom wall (32) of the housing but moves into said receiving means (35) when the eccentric pin (25) is urged axially (60) into the housing.

3. A framework according to claim 1 or claim 2 characterised in that the rotary guide support (63) only engages the side of the eccentric pin (25), where the opening (34) in the housing (23) opens.

4. A framework according to one or more of claims 1 to 3 characterised in that the holding member (24) comprises a profiled plate, at the outer flat side (46) of which is disposed the control surface (42) for the eccentric disc (29) and at the inner flat side (49) of which the rotary guide support (63) for the eccentric pin (25) axially projects.

5. A framework according to one or more of claims 1 to 4 characterised in that the rotary guide support (23) comprises a hollow-shaped deformation (62) of the plate material.

6. A framework comprising releasably connectable profile bars (10, 11)
of which at least some have undercut grooves (14) and others have an end cavity (12) for the insertion of a housing (23) which belongs to a connector (20) and which movably (40, 40') accommodates a holding member (24),
the holding member (24) has at least one hook end (22, 22') which projects at the end out of the profile bar and which is transversely movably guided in the housing (23) and which can be coupled to the groove (14) of the other profile bar (11),
wherein an axially spring-loaded eccentric pin (25) passes through the holding member (24) and has an eccentric disc (29) which bears at least against a control surface (42) on the holding member (24) and upon rotary actuation (57, 57') of the eccentric pin (25) serves to produce the movement (40, 40') of the holding member (24),
and the outer pin end (26) which serves for rotary actuation (57, 57') of the eccentric pin (25) and/or the oppositely disposed inner pin end (27) are rotatably supported only in a place-wise manner in the housing (23) and give rise to the danger of a tilting movement (61) of the eccentric pin (25) in the housing (23),
wherein, for rotationally oriented insertion assembly (16) of the eccentric pin (25) in the housing (23), the inner pin end (27) has an assembly recess (53) in the end region and the bottom wall (32) of the housing (23) has an assembly projection (48),
characterised in that a cover (66) for radially closing the assembly recess (53) is carried at the inner pin end (27) of the eccentric pin (25) in the fully assembled condition, and
the peripheral surface (64) of the cover (66) is rotatably guided at least in the region (70) of the assembly projection (48) (Figure 12).

7. A framework according to claim 6 characterised in that the housing (23) has a top wall (31) and a bottom wall (32),
and the outer pin end (26) of the eccentric pin (25) which serves at the same time for rotary actuation (57, 57') of the eccentric pin is rotatably supported at a half side in an opening (34) in the housing top wall (31), the opening being open towards the rear end (30) of the housing (23), and normally axially resiliently engages into a transverse hole (17) in the profile bar but can be axially urged (60) into the housing against said spring loading (50),
while the inner pin end (27) of the eccentric pin (25) is normally disposed substantially axially outside a receiving means (35) in the bottom wall (32) of the housing but moves into said receiving means (35) when the eccentric pin (25) is urged axially (60) into the housing.

8. A framework according to claim 6 or claim 7 characterised in that the cover comprises a sleeve (66) which encloses the inner pin end (27).

9. A framework according to one or more of claims 6 to 8 characterised in that the holding member (24) comprises a profiled plate,
the two flat sides (46, 49) of which in the assembly situation come to bear on the one hand against a radial step (51) of the eccentric pin (25) and on the other hand against the cover (66), and
between the radial step (51) of the eccentric pin (25) and the cover (66) is a radial groove (68) into which the plate material of the holding member (24) engages.

10. A framework according to one or more of claims 1 to 9 characterised in that the axial spring force (50) is applied to the eccentric pin (25) by way of the plate-shaped holding member (24) and the eccentric pin (25) is supported by way of a radial step (51) against the outer flat side (54) of the plate-shaped holding member (24).

11. A framework according to claim 10 characterised in that the eccentric disc (29) of the eccentric pin (25) with its inner disc surface forms the radial step which bears against the holding member (24).

12. A framework according to one or more of claims 1 to 11 characterised in that the plate of the holding member (24) comprises resilient material and has a cut-out resilient tongue (18) which bears slidably against an inside surface of the housing (23) and produces the axial spring force (50) for the eccentric pin (25).

13. A framework according to one or more of claims 1 to 12 characterised in that on the one hand the housing (23) has an axial free space which permits the outer pin end (26) to be axially pushed in (60) in an initial rotary position (Figures 1 to 4) of the eccentric pin (25), that determines the uncoupled position of the hook end (22, 22'),
but on the other hand the housing bottom wall (32) has an abutment surface (71) which blocks the axial inward pushing movement (60) in any other rotary position, in particular a final rotary position (Figure 5) of the eccentric pin (25), that defines the coupled position of the hook end (22, 22').

## Revendications

1. Structure en barres profilées (10, 11) susceptibles d'être assemblées et détachables, et dont certaines présentent au moins quelques rainures (14) en contre-dépouille et d'autres présentent un espace creux frontal (12) pour l'enfichage d'un boîtier (23) appartenant à un organe de liaison (20), lequel boîtier reçoit de façon mobile (40, 40') un organe de retenue (24), qui présente au moins une extrémité en crochet (22, 22') qui fait saillie frontalement hors de la barre profilée, qui est guidée en étant mobile transversalement dans le boîtier (23) et qui est susceptible d'être accouplée avec la rainure (14) de l'autre barre profilée (11), tandis qu'une broche excentrée (25) sollicitée élastiquement dans le sens axial traverse l'organe de retenue (24) et présente un disque excentré (29) qui s'appuie au moins sur une surface de commande (42) se trouvant sur l'organe de retenue (24) et qui sert, par un actionnement en rotation (57, 57') de la broche excentrée (25), à déplacer (40, 40') l'organe de retenue (24), et que l'extrémité extérieure (26) de broche servant à actionner en rotation (57, 57') la broche excentrée (25) et/ou l'extrémité de broche intérieure opposée (27) sont supportées à rotation dans le boîtier (23) seulement par places, ce qui risque de provoquer un déplacement de basculement (61) de la broche excentrée (25) dans le boîtier (23),
caractérisée en ce que
l'organe de retenue (24) comporte un appui (appui de guidage en rotation 63) qui est situé vers l'extrémité intérieure (27) de broche par rapport à sa surface de commande (42) en étant déplacé axialement en retour vers l'intérieur et sur lequel la broche excentrée (25) est guidée en rotation (figures 1 à 9 et 11).

2. Structure selon la revendication 1, caractérisée en ce que le boîtier (23) comporte une paroi de couverture (31) et une paroi de fond (32), et en ce que l'extrémité extérieure (26) de broche de la broche excentrée (25), qui sert également à actionner en rotation (57, 57') la broche excentrée, est montée en rotation à moitié guidée dans un tronçon (34) de la paroi de recouvrement (31) de boîtier, tronçon qui est ouvert à la sortie de l'extrémité arrière (30) du boîtier (23). et en ce que cette extrémité de broche est normalement engagée de façon axialement élastique dans un trou transversal (17) de la barre profilée, tout en étant susceptible d'être pressée axialement (60) dans le boîtier à l'encontre de la sollicitation élastique (50), tandis que l'extrémité intérieure (27) de la broche excentrée (25) se trouve normalement sensiblement à l'extérieur dans le sens axial d'un logement (35) prévu dans le fond (32) du boîtier, tout en pouvant venir se placer dans le logement (35) après qu'une pression axiale (60) a été exercée sur la broche excentrée (25).

3. Structure selon la revendication 1 ou 2, caractérisée en ce que l'appui de guidage en rotation (63) s'applique uniquement sur la face de la broche excentrée (25) où le tronçon (34) s'ouvre dans le boîtier (23).

4. Structure selon l'une ou plusieurs des revendications 1 à 3, caractérisée en ce que l'organe de retenue (24) se compose d'une plaque profilée, sur la face de surface extérieure (46) de laquelle se trouve la surface de commande (42) pour le disque excentré (29), et sur la face de surface intérieure (49) de laquelle fait saillie axialement l'appui de guidage en rotation (63) pour la broche excentrée (25).

5. Structure selon l'une ou plusieurs des revendications 1 à 4, caractérisée en ce que l'appui de guidage en rotation (63) est constitué par une déformation (62) en forme de bosse du matériau de la plaque.

6. Structure en barres profilées (10, 11) susceptibles d'être assemblées et détachables, et dont certaines présentent au moins quelques rainures (14) en contre-dépouille et d'autres présentent un espace creux frontal (12) pour l'enfichage d'un boîtier (23) appartenant à un organe de liaison (20), lequel boîtier reçoit de façon mobile (40, 40') un organe de retenue (24), qui présente au moins une extrémité en crochet (22, 22') qui fait saillie frontalement hors de la barre profilée, qui est guidée en étant mobile transversalement dans le boîtier (23) et qui est susceptible d'être accouplée avec la rainure (14) de l'autre barre profilée (11), tandis qu'une broche excentrée (25) sollicitée élastiquement dans le sens axial traverse l'organe de retenue (24) et présente un disque excentré (29) qui s'appuie au moins sur une surface de commande (42) se trouvant sur l'organe de retenue (24) et qui sert, par un actionnement en rotation (57, 57') de la broche excentrée (25), à déplacer (40, 40') l'organe de retenue (24), et que l'extrémité extérieure de broche (26) servant à actionner en rotatio0n (57. 57') la broche excentrée (25) et/ou l'extrémité de broche intérieure opposée (27) sont supportées à rotation dans le boîtier (23) seulement par places, ce qui risque de provoquer un déplacement de basculement (61) de la broche excentrée (25) dans le boîtier (23), dans lequel, pour le montage par enfichage (16) orienté en rotation de la broche excentrée (25) dans le boîtier (23), l'extrémité intérieure (27) de broche comporte dans la zone frontale une découpe de montage (53) et la paroi de fond (32) du boîtier (23) comporte une saillie de montage (48),
caractérisé en ce que
à l'extrémité intérieure (27) de broche de la broche excentrée complètement montée (25), s'applique une couverture (66) fermant radialement la découpe de montage (53), et en ce que la surface périphérique (64) de la couverture (66) est guidée en rotation au moins dans la zone (70) de la saillie de montage (48), (figure 12).

7. Structure selon la revendication 6, caractérisée en ce que le boîtier (23) comporte une paroi de couverture (31) et une paroi de fond (32), et en ce que l'extrémité extérieure (26) de broche de la broche excentrée (25), qui sert également à actionner en rotation (57, 57') la broche excentrée, est à moitié guidée en rotation dans un tronçon (34) de la paroi de recouvrement (31) de boîtier. tronçon qui est ouvert à la sortie de l'extrémité arrière (30) du boîtier (23). et en ce que cette extrémité de broche est normalement engagée de façon axialement élastique dans un trou transversal (17) de la barre profilée, tout en étant susceptible d'être pressée axialement (60) dans le boîtier à l'encontre de la sollicitation élastique (50), tandis que l'extrémité intérieure (27) de broche de la broche excentrée (25) se trouve normalement sensiblement à l'extérieur dans le sens axial d'un logement (35) prévu dans le fond (32) du boîtier, tout en pouvant venir se placer dans le logement (35) après qu'une pression axiale (60) a été exercée sur la broche excentrée (25).

8. Structure selon la revendication 6 ou 7, caractérisée en ce que la couverture se compose d'un manchon (66), qui enveloppe l'extrémité intérieure (27) de la broche.

9. Structure selon l'une ou plusieurs des revendications 6 à 8, caractérisée en ce que l'organe de retenue (24) se compose d'une plaque profilée, dont les deux faces de surface (46, 49) viennent en appui au montage, d'une part sur un gradin radial (51) de la broche excentrée (25), et d'autre part sur la couverture (66), et en ce que, entre le gradin radial (51) de la broche excentrée (25) et la couverture (66) se trouve une rainure radiale (68), dans laquelle s'engage le matériau en plaque de l'organe de retenue (24).

10. Structure selon l'une ou plusieurs des revendications 1 à 9, caractérisée en ce que la force élastique axiale (50) s'exerce sur la broche excentrée (25) par l'intermédiaire de l'organe de retenue (24) en forme de plaque, et en ce que la broche excentrée (25) s'appuie sur la face extérieure de surface (54) de l'organe de retenue (24) en forme de plaque, par l'intermédiaire d'un gradin radial (51).

11. Structure selon la revendication 10, caractérisée en ce que le disque excentré (29) de la broche excentrée (25) forme, par sa surface intérieure de disque, le gradin radial, qui s'appuie sur l'organe de retenue (24).

12. Structure selon l'une ou plusieurs des revendications 1 à 11, caractérisée en ce que la plaque de l'organe de retenue (24) est réalisée en matériau élastique pour ressort et comporte une languette (18) élastique pour ressort découpée, qui s'appuie de façon glissante sur une surplace intérieure du boîtier (23), et qui produit la force élastique axiale (50) pour la broche excentrée (25).

13. Structure selon l'une ou plusieurs des revendications 1 à 12, caractérisée en ce que le boîtier (23), d'une part comporte un espace libre axial qui, dans une position en rotation de sortie de la broche excentrée (25) (figures 1 à 4) déterminant la position désaccouplée de l'extrémité en crochet (22, 22'), autorise un pressage axial (60) de l'extrémité extérieure (16) de broche, mais en ce que la paroi de fond (32) du boîtier présente par ailleurs une surface de butée (71) qui, dans chaque autre position en rotation, en particulier dans une position en rotation d'extrémité (figure 5) de la broche excentrée (25) déterminent la position accouplée de l'extrémité en crochet (22, 22'), bloquent le pressage axial (60).
